# EUROPÄISCHE PATENTSCHRIFT

(11) **EP 3 648 222 B1**
(45) Veröffentlichungstag und Bekanntmachung des Hinweises auf die Patenterteilung: **02.09.2026**
(21) Anmeldenummer: 19207154.6
(22) Anmeldetag: 05.11.2019
(51) Int. Cl.: H01M 10/04, H01M 10/643, H01M 10/654

(54) **BATTERIEZELLE**
BATTERY CELL
ÉLÉMENT DE BATTERIE

(30) Priorität: 05.11.2018 DE 102018127476
(43) Veröffentlichungstag der Anmeldung: 06.05.2020
(73) Patentinhaber: PowerCo SE, 38239 Salzgitter (DE)
(72) Erfinder: Hohm, Volker, 38162 Destedt (DE); Schaar, Bastian, 38116 Braunschweig (DE); Wesche, Frank, 38458 Velpke (DE); Kaufmann, Jörg, 38550 Isenbüttel (DE); Herten, Helge, 38300 Wolfenbüttel (DE)
(74) Vertreter: FDST Patentanwälte

(56) Entgegenhaltungen:
- CN-U- 202 444 033
- DE-A1- 2 503 897
- US-A1- 2011 305 932

## Beschreibung

Die Erfindung betriff eine Batteriezelle in Form einer Rundzelle nach dem Oberbegriff des unabhängigen Vorrichtungsanspruches und ein Verfahren zum Herstellen einer Batteriezelle in Form einer Rundzelle nach dem unabhängigen Verfahrensanspruch.

Bei der Batterieentwicklung wird das Ziel verfolgt, das Volumen der Batterien und einzelner Batteriezellen so groß wie möglich und das Gehäuse so klein wie möglich auszulegen, dass sämtliche mechanische Lastfälle ohne Brand und ohne Kurzschluss ertragen werden können. Um die maximale Leistungs- und Energiedichte zu erreichen, müssen die Strukturbauteile platzsparend und möglichst ohne Redundanzen ausgelegt werden. Zugleich muss neben dem Bauraum für die Batteriezellen ausreichend Bauraum innerhalb des Gehäuses für die elektrischen Leitungen und Steuergeräte vorgehalten werden. Die Batteriezellen müssen wiederum möglichst guten thermischen Kontakt zur Kühlvorrichtung aufweisen. Ebenso müssen alterungsbedingte Ausdehneffekte, ein sog. Swelling, berücksichtigt werden. Batteriezellen in Form von Rundzellen haben Vorteile in Hinblick auf Swelling. Nachteilig bei den Rundzellen ist hingegen, dass die Geometrie der Batteriezellen einer Einschränkung unterliegt. Das metallene Gehäuse der Rundzellen wird mithilfe eines Tiefziehprozesses hergestellt, aus dem ein zylindrisches Gehäuse mit einem monolithisch verbundenen Boden hervorgeht. Dabei ist das Verhältnis zwischen Länge und Radius nur begrenzt einstellbar. Eine hohe Anzahl an kleineren Rundzellen erfordert eine große Menge an Peripherie für Befestigung, elektrische Verschaltung, Kühlung usw., womit der begrenzte zur Verfügung stehende Bauraum nur schlecht ausgenutzt werden kann. Eine kleine Anzahl an größeren Rundzellen bringt wiederum den Nachteil mit sich, dass eine gleichmäßige Kühlung der größeren Rundzellen problematisch ist.

Beispielhafte Batteriezellen sind aus den Schriften US 2011/305932 A1, CN 202 444 033 U und DE 25 03 897 A1 bekannt.

Die Aufgabe der Erfindung ist es daher, eine verbesserte Batteriezelle, bspw. für eine modular aufgebaute Batterie, insbesondere für HV-Anwendungen in Elektrofahrzeugen, bereitzustellen. Insbesondere ist es Aufgabe der Erfindung, eine einfach aufgebaute, kostengünstige und gewichtsreduzierte Batteriezelle bereitzustellen, die eine gleichmäßige Kühlung ermöglicht und die optimierte, vorzugsweise vergrößerte, Abmaße aufweist. Zudem ist es Aufgabe der Erfindung, ein verbessertes Verfahren zum Herstellen einer Batteriezelle in Form einer Rundzelle bereitzustellen, welches einfach, schnell und kostengünstig ausgeführt werden kann.

Die erfindungsgemäße Aufgabe wird gelöst durch eine Batteriezelle mit den Merkmalen des unabhängigen Vorrichtungsanspruches und durch ein Verfahren zum Herstellen einer Batteriezelle in Form einer Rundzelle mit den Merkmalen des unabhängigen Verfahrensanspruches. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bzgl. der Offenbarung zu den Erfindungsaspekten der Erfindung stets wechselseitig Bezug genommen wird bzw. werden kann.

Die Erfindung stellt eine Batteriezelle in Form einer Rundzelle bereit, aufweisend: mindestens ein Elektrodenelement mit einer Innenseite und einer Außenseite und mindestens ein Temperierungselement, wobei die Innenseite des mindestens einen Elektrodenelementes zumindest abschnittweise mithilfe des Temperierungselementes von der Außenseite des mindestens einen Elektrodenelementes beabstandet ist.

Die Batteriezelle kann mindestens ein Elektrodenelement aufweisen. D.h., dass nur ein, bspw. bandförmiges, Elektrodenelement vorgesehen sein kann, welches zu einem Wickel aufgewickelt werden kann, oder dass mehrere, bspw. zylindermantelförmige, Elektrodenelemente vorgesehen sein können, die koaxial zueinander angeordnet und ineinander gesteckt werden können. Das mindestens eine Elektrodenelement, sei es nur ein einziges, das gewickelt wird, oder jedes von mehreren Elektrodenelementen weist jeweils eine Außenseite und eine Innenseite auf. Bei nur einem Elektrodenelement ist das entsprechend nur eine Außenseite und nur eine Innenseite. Bei mehreren Elektrodenelementen sind es jeweils eine Außenseite und eine Innenseite an jedem Elektrodenelement. Bei nur einem Elektrodenelement wird das, bspw. ebenfalls bandförmige, Temperierungselement zwischen den einzelnen Schichten eingewickelt. Auf diese Weise trennt das Temperierungselement die Außenseite einer Wickelschicht von der Innenseite einer darauf aufgewickelten Wickelschicht des einzigen Elektrodenelementes. Bei mehreren Elektrodenelementen wird das mindestens eine Temperierungselement zwischen zwei benachbarten Elektrodenelementen angeordnet. Auf diese Weise kommt das mindestens eine Temperierungselement zwischen die Außenseite eines Elektrodenelementes und die Innenseite eines nächsten Elektrodenelementes zur Auflage.

Erfindungsgemäß wird eine Rundzelle mit beliebig großen Abmessungen bereitgestellt, die gleichmäßig temperiert wird. Der Erfindungsgedanke liegt dabei darin, dass innerhalb der Rundzelle sich die Lagen mit Zellmaterial (gebildet durch das mindestens eine Elektrodenelement) und Kühlungsebenen (gebildet durch das mindestens eine Temperierungselement) kontinuierlich abwechseln und damit das Gehäuse, wenn gewünscht vollständig, ausfüllen. Die elektrische Verschaltung sowie die Anschlüsse an die Kühlung (Routing) erfolgen an den Stirnflächen der Rundzellen. Durch Entnehmen einzelner Schichten von Zellmaterial und ggf. Kühlungsebenen kann die Reichweite oder die Leistung der Batteriezelle gesteuert und/oder variiert werden. In diesem Zuge entsteht ein Hohlraum im Kern der Rundzelle. Zum Stützen der Rundzelle von dem Kern heraus können ein oder mehrere Füllkörper bereitgestellt sein, die die verbleibenden Elektrodenelemente in der Batteriezelle schützen.

Die erfindungsgemäße Batteriezelle kann vorteilhafterweise für HV-Anwendungen, bspw. in Elektrofahrzeugen, verwendet werden. Dabei können vergleichbar große Rundzellen bereitgestellt werden, deren Länge den verfügbaren Bauraum in die Fahrzeugquerrichtung auf eine vorteilhafte Weise ausnutzen kann. Solche Batteriezellen können entsprechend in Fahrzeugquerrichtung verbaut werden. Somit kann der verfügbare Bauraum im Fahrzeug optimal ausgenutzt werden. Zugleich wird das Gewicht der Batterie mit einer oder mehreren solchen Batteriezellen reduziert, da weniger Komponenten für Befestigung, elektrische Verschaltung, Kühlung usw. benötigt werden. Das mindestens eine erfindungsgemäße Temperierungselement ermöglicht eine homogene Kühlung über einen, vorzugsweise beliebig großen, Radius und eine, vorzugsweise beliebig hohe, Rundzelle. Es werden keine Zusatzmaßnahmen für Swelling benötigt, da diese Funktion bereits durch die Rundzelle erfüllt ist. Außerdem ist die erfindungsgemäße Rundzelle einfach und kostengünstig in der Herstellung.

Ferner sieht die Erfindung bei einer Batteriezelle vor, dass das mindestens eine Elektrodenelement mindestens zwei Elektrodenelemente, bspw. ein erstes Elektrodenelement und ein zweites Elektrodenelement, umfasst. Somit kann ein Stecksystem bereitgestellt werden.

Die Erfindung sieht vor, dass das mindestens eine Temperierungselement zwischen der Innenseite eines ersten Elektrodenelementes und der Außenseite eines zweiten Elektrodenelementes angeordnet ist. Somit kann das mindestens eine Temperierungselement zwischen den mindestens zwei Elektrodenelementen angeordnet sein und gleichmäßig die Elektrodenelemente über deren flächige Erstreckung (Zylindermantelfläche) und nicht nur am Boden temperieren, wie es zurzeit bei den bekannten Rundzellen der Fall ist.

Im Rahmen der Erfindung kann das mindestens eine Temperierungselement in Form eines, bspw. elektrisch schaltbaren, Kühlelementes und/oder eines mit einem Kühlmedium durchflossenen Kühlleiters ausgeführt sein. Auf diese Weise kann eine Flexibilität bei der Wahl und der Ansteuerung des Temperierungselementes bereitgestellt werden. Ein elektrisch schaltbares Kühlelement kann schneller angesteuert werden. Ein mit einem Kühlmedium durchflossener Kühlleiter kann an einen Fahrzeugkühler und/oder einen Wärmetauscher angeschlossen werden und somit in einer fahrzeugseitigen Kühlvorrichtung für den Elektromotor und/oder einer Klimaanlage für den Fahrzeuginnerraum funktional integriert werden.

Zudem kann die Erfindung bei einer Batteriezelle vorsehen, dass ein Gehäuse für die Batteriezelle vorgesehen ist. Das Gehäuse kann vorteilhaft sein, um die Batteriezelle vor mechanischen Einflüssen und Verschmutzung zu schützen. Vorteilhafterweise kann das Gehäuse mit einer erhöhten Wandstärke ausgeführt sein, um große Lasten abfangen und vorzugsweise an die Fahrzeugkarosserie weiterleiten zu können. Dies erlaubt die Einsparung von weiteren Systembauteilen und führt sogleich zu einer effizienten Bauraumausnutzung und einem geringen Gewicht der Batteriezelle bei einem erhöhten Energieinhalt der Batteriezelle.

Ferner kann die Erfindung bei einer Batteriezelle vorsehen, dass die Außenseite des mindestens einen Elektrodenelementes zumindest abschnittweise mithilfe des mindestens einen Temperierungselementes vom Gehäuse beabstandet ist. Somit kann die äußerste Lage des mindestens einen Elektrodenelementes ebenso gleichmäßig temperiert werden wie die innen liegenden Lagen.

Weiterhin kann die Erfindung bei einer Batteriezelle vorsehen, dass die mindestens zwei Elektrodenelemente ein Stecksystem bilden. Somit kann eine variable Anpassung der Reichweite und der Leistung der Batteriezelle ermöglicht werden.

Des Weiteren kann die Erfindung bei einer Batteriezelle vorsehen, dass die mindestens zwei Elektrodenelemente zylindermantelförmig ausgebildet und/oder koaxial zueinander anordenbar sind. Auf diese Weise können die mindestens zwei Elektrodenelemente platzsparend zueinander positioniert werden. Zudem kann somit die Lagerung von mehreren Elektrodenelementen vereinfacht werden.

Zudem ist es im Rahmen der Erfindung denkbar, dass die mindestens zwei Elektrodenelemente unterschiedliche Durchmesser aufweisen. Dadurch können die mindestens zwei Elektrodenelemente ineinander angeordnet werden.

Ferner kann die Erfindung bei einer Batteriezelle vorsehen, dass das mindestens eine Temperierungselement mindestens zwei Temperierungselemente umfasst. Im Falle von mehreren Elektrodenelementen kann jedes von mindestens zwei Temperierungselementen jeweils zwischen zwei benachbarten Elektrodenelementen angeordnet werden.

Weiterhin kann die Erfindung bei einer Batteriezelle vorsehen, dass die mindestens zwei Temperierungselemente zylindermantelförmig ausgebildet und/oder koaxial zueinander anordenbar sind. Auf diese Weise können die mindestens zwei Temperierungselemente platzsparend zueinander positioniert werden. Zudem kann somit die Lagerung sowie der Anschluss von mehreren Temperierungselementen vereinfacht werden.

Des Weiteren kann die Erfindung bei einer Batteriezelle vorsehen, dass die mindestens zwei Temperierungselemente unterschiedliche Durchmesser aufweisen. Dadurch können die mindestens zwei Temperierungselemente ineinander angeordnet werden.

Ferner kann die Erfindung bei einer Batteriezelle mindestens einen hülsenförmigen oder zylinderförmigen Füllkörper vorsehen, auf welchem das mindestens eine Elektrodenelement angeordnet ist. Somit kann im Kern der Batteriezelle ein hohler Füllkörper angeordnet werden, der die Batteriezelle von innen schützt, stützt und eine einfache Lagerung der Batterie, bspw. auf einem Lagerbolzen, erlaubt. Mithilfe des mindestens einen Füllkörpers kann weiterhin ein Elektrodenkern und ggf. weitere Elektrodenelemente ersetzt werden, um eine Anpassung der Reichweite und der Leistung der Batteriezelle zu ermöglichen.

Weiterhin kann die Erfindung bei einer Batteriezelle vorsehen, dass die Innenseite des mindestens einen Elektrodenelementes zumindest abschnittweise mithilfe des mindestens einen Temperierungselementes von dem mindestens einen Füllkörper beabstandet ist. Somit kann die innerste Lage des mindestens einen Elektrodenelementes ebenso gleichmäßig temperiert werden wie die darauf liegenden Lagen.

Des Weiteren sieht die Erfindung bei einer Batteriezelle vor, dass der mindestens eine Füllkörper mindestens zwei Füllkörper mit unterschiedlichen Durchmessern aufweist, auf welchen eine skalierbare Anzahl an den mindestens zwei Elektrodenelementen anordenbar ist. Somit kann ein anpassungsfähiges Stecksystem bereitgestellt werden. Auf diese Weise können unterschiedlich leistungsfähige Systeme zum Verkauf angeboten werden, die nach und nach aufgerüstet werden können. Zugleich kann ein solches System mit allen seinen Steckteilen bewusst eingesetzt werden, um Verschleiß und Alterung der Zellen zu vermeiden. Denkbar ist, dass für kürzere Strecken kleinere Batteriezellen von Vorteil sein können. Da solche kleinere Batteriezellen weniger Gewicht aufweisen, können Energiekosten zur Fortbewegung des Gewichts der Batteriezelle reduziert werden. Auch ein Aufladen solcher kleineren Batteriezellen kann schneller geschehen. Für längere Strecken können vollständig mit Elektrodenelementen ausgefüllte Batteriezellen von Vorteil sein, um eine größere Reichweite des Elektrofahrzeuges zu erreichen.

Zudem wird die erfindungsgemäße Aufgabe durch ein Verfahren zum Herstellen einer Batteriezelle in Form einer Rundzelle gelöst, die insbesondere wie oben beschrieben ausgebildet sein kann, aufweisend mindestens einen Schritt:
- Positionieren mindestens eines Temperierungselements derart an mindestens einem Elektrodenelement der Batteriezelle, dass eine Innenseite des mindestens einen Elektrodenelementes zumindest abschnittweise mithilfe des Temperierungselementes von einer Außenseite des mindestens einen Elektrodenelementes beabstandet ist.

Mithilfe des erfindungsgemäßen Verfahrens werden die gleichen Vorteile erreicht, die oben im Zusammenhang mit der erfindungsgemäßen Batteriezelle beschrieben wurden. Auf diese Vorteile wird vorliegend vollumfänglich Bezug genommen.

Außerdem kann ein Verfahren im Sinne der Erfindung mindestens einen weiteren Schritt aufweisen:
- Ineinanderstecken von mindestens zwei Elektrodenelementen, sodass das mindestens eine Temperierungselement zwischen der Innenseite eines ersten Elektrodenelementes und der Außenseite eines zweiten Elektrodenelementes angeordnet ist.

Somit kann ein flexibel zusammenbaubares Stecksystem bereitgestellt werden, welches eine gleichmäßige Kühlung aller Elektrodenelemente als Steckelemente aufweist.

Weiterhin weist das Verfahren im Sinne der Erfindung mindestens einen weiteren Schritt auf:
- Bereitstellen von mindestens zwei Füllkörpern mit unterschiedlichen Durchmessern, und ggf.
- Einstecken von mindestens einem der zwei Füllkörper anstelle eines zylinderförmigen Elektrodenkerns und/oder anstelle mindestens eines von den mindestens zwei Elektrodenelementen.

Somit kann ein anpassungsfähiges und/oder bewusst einsetzbares und/oder aufrüstbares Stecksystem bereitgestellt werden.

Weitere, die Erfindung verbessernde Maßnahmen werden nachstehend mit der Beschreibung der bevorzugten Ausführungsbeispiele der Erfindung anhand der Figuren näher dargestellt. Dabei können die in den Ansprüchen und in der Beschreibung erwähnten Merkmale jeweils einzeln für sich oder in beliebiger Kombination erfindungswesentlich sein. Dabei ist zu beachten, dass die Figuren nur einen beschreibenden Charakter haben und nicht dazu gedacht sind, die Erfindung in irgendeiner Form einzuschränken. Es zeigt:
- Fig. 1: eine schematische Darstellung einer erfindungsgemäßen Batteriezelle gemäß einer möglichen Ausführungsform,
- Fig. 2: eine schematische Darstellung einer nicht erfindungsgemäßen Batteriezelle,
- Fig. 3: eine schematische Darstellung einer erfindungsgemäßen Batteriezelle in Form eines Stecksystems,
- Fig. 4: eine schematische Darstellung einer erfindungsgemäßen Batteriezelle in Form eines Stecksystems mit einem möglichen Füllkörper, und
- Fig. 5: eine schematische Darstellung einer erfindungsgemäßen Batteriezelle in Form eines Stecksystems mit einem weiteren möglichen Füllkörper.

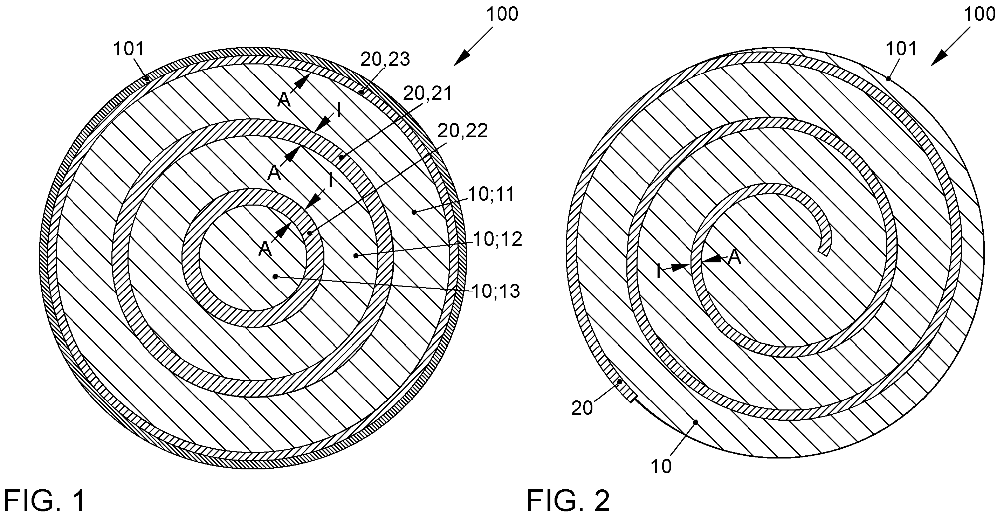

Die Figuren 1 bis 5 zeigen eine Batteriezelle 100 in Form einer Rundzelle. Die Batteriezelle 100 weist mindestens ein Elektrodenelement 10 mit einer Innenseite I und einer Außenseite A und mindestens ein Temperierungselement 20 auf. Erfindungsgemäß ist es vorgesehen, dass die Innenseite I des mindestens einen Elektrodenelementes 10 zumindest abschnittweise mithilfe des Temperierungselementes 20 von der Außenseite A des mindestens einen Elektrodenelementes 10 beabstandet ist.

Die Batteriezelle 100 gemäß allen Figuren 1 bis 5 weist mindestens ein Elektrodenelement 10 auf. In der Ausführungsform der Figur 2 kann die Batteriezelle 100 nur ein, vorzugsweise bandförmiges, Elektrodenelement 10 aufweisen, welches zu einem Wickel aufgewickelt werden kann. In der Ausführungsform der Figur 1 kann die Batteriezelle 100 mehrere, vorzugsweise zylindermantelförmige, Elektrodenelemente 10 aufweisen, die ineinander gesteckt werden können. Dabei können ein erstes Elektrodenelement 11, ein zweites Elektrodenelemente 12 und ein Elektrodenkern 13 vorgesehen sein. Selbstverständlich sind mehrere Elektrodenelemente 10 ebenfalls denkbar. Die Figuren 1 und 2 zeigen jeweils einen Querschnitt durch die erfindungsgemäße Batteriezelle 100.

Das mindestens eine Elektrodenelement 10, sei es nur ein einziges, das gewickelt wird, oder jedes von mehreren Elektrodenelementen 10 weist jeweils eine Außenseite A und eine Innenseite I auf. Bei nur einem Elektrodenelement 10 gemäß der Figur 2 ist das entsprechend nur eine durchgehende Außenseite A und nur eine durchgehende Innenseite I. Bei mehreren Elektrodenelementen 10 gemäß der Figur 1 sind es jeweils eine Außenseite A und eine Innenseite I an jedem Elektrodenelement 10.

Bei nur einem Elektrodenelement 10 gemäß der Figur 2 wird das, bspw. ebenfalls bandförmiges, Temperierungselement 20 zwischen den einzelnen Schichten eingewickelt. Auf diese Weise trennt das Temperierungselement 20 die Außenseite A einer Wickelschicht von der Innenseite I einer darauf aufgewickelten Wickelschicht des einzigen Elektrodenelementes 10.

Bei mehreren Elektrodenelementen 10 gemäß der Figur 1 wird das mindestens eine Temperierungselement 20 zwischen zwei benachbarten Elektrodenelementen 10 angeordnet. Auf diese Weise kommt das mindestens eine Temperierungselement 20 zwischen die Außenseite A eines Elektrodenelementes 10 und die Innenseite I eines nächsten Elektrodenelementes 10. In der Figur 1 ist ein erstes Temperierungselement 21 zwischen der Innenseite I des ersten Elektrodenelementes 11 und der Außenseite A des zweiten Elektrodenelementes 12 angeordnet. Ferner ist ein zweites Temperierungselement 22 zwischen der Innenseite I des zweiten Elektrodenelementes 12 und der Außenseite A des Elektrodenkerns 13 angeordnet. Zudem ist ein drittes Temperierungselement 23 zwischen einem Gehäuse 101 und der Außenseite A des ersten Elektrodenelementes 11 angeordnet.

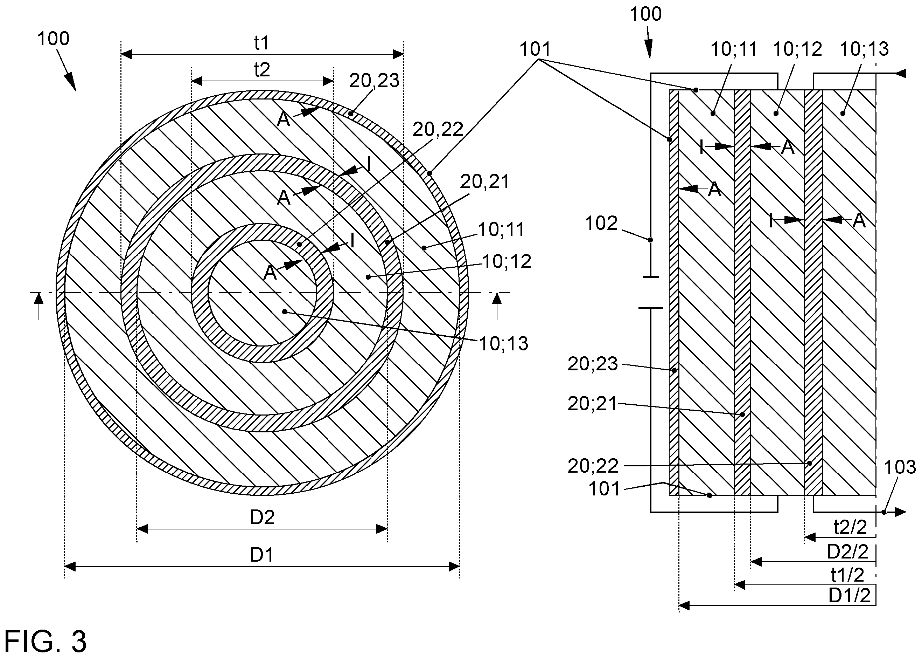

Eine derartige Positionierung des mindestens einen Temperierungselementes 20 sorgt für eine homogene Temperierung einer Rundzelle mit auch beliebig großen Abmessungen. Vorteilhafterweise werden innerhalb der Rundzelle gemäß der Erfindung die Lagen mit Zellmaterial (gebildet durch ein oder mehrere Elektrodenelemente 10) und Kühlungsebenen (gebildet durch ein oder mehrere Temperierungselemente 20) kontinuierlich abgewechselt. Dabei kann das Gehäuse 101, wenn gewünscht vollständig (vgl. die Figuren 1 und 3), ausgefüllt werden.

Das Temperierungselement 20 kann in Form eines, bspw. elektrisch schaltbaren, Kühlelementes und/oder eines mit einem Kühlmedium durchflossenen Kühlleiters ausgeführt sein. Auf diese Weise kann eine Flexibilität bei der Wahl und der Ansteuerung des Temperierungselementes 20 bereitgestellt werden. Ein elektrisch schaltbares Kühlelement kann schneller angesteuert werden. Ein mit einem Kühlmedium durchflossener Kühlleiter kann vorteilhafterweise in eine fahrzeugseitige Kühlvorrichtung für den Elektromotor und/oder eine Klimaanlage für den Fahrzeuginnerraum funktional integriert werden.

Wie es die Figuren 3 bis 5 andeuten, erfolgen die Anschlüsse für die elektrische Verschaltung 102 und für die Kühlung 103 an den Stirnflächen der Rundzellen.

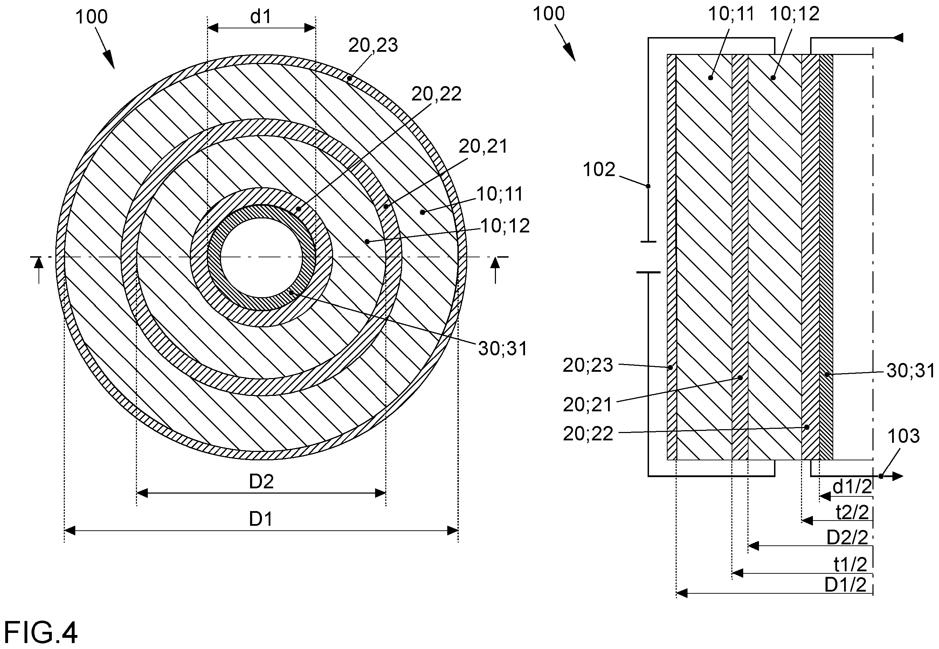

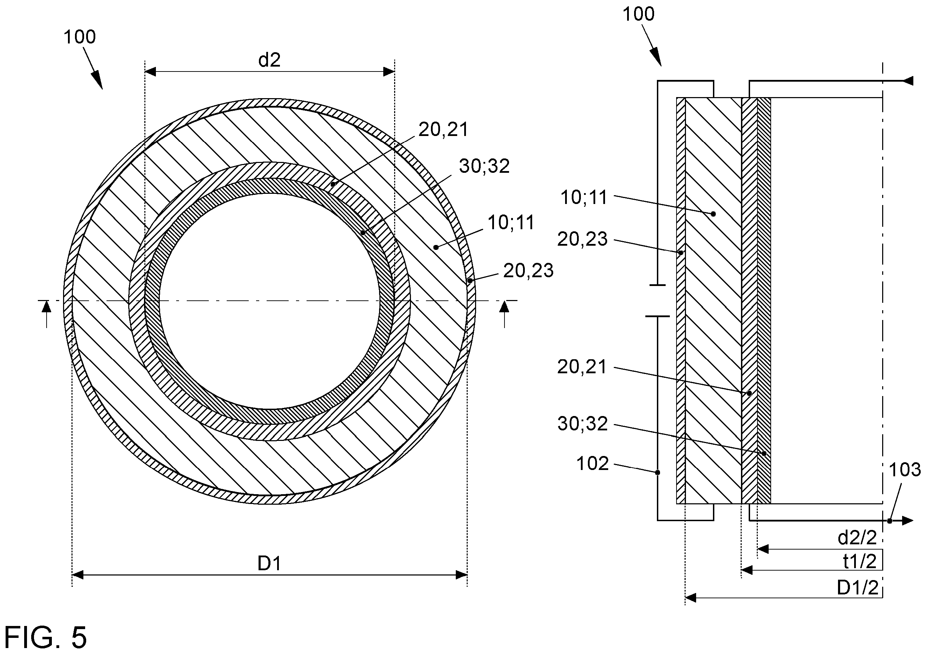

Die Figuren 4 und 5 verdeutlichen, dass durch Entnehmen einzelner Schichten von Zellmaterial und ggf. einzelner Kühlungsebenen im Kern der Rundzelle die Reichweite oder Leistung der Batteriezelle 100 gesteuert und/oder variiert werden kann. Zum Stützen der Rundzelle von dem Kern heraus können ein oder mehrere Füllkörper 30 bereitgestellt sein, der oder die die verbleibenden Elektrodenelemente 10 in der Batteriezelle 100 im Kern der Rundzelle schützen und stützen.

Die erfindungsgemäße Batteriezelle 100 kann vorteilhafterweise für HV-Anwendungen, bspw. in Elektrofahrzeugen, verwendet werden. Dabei können vergleichbar große Rundzellen bereitgestellt werden, die der Länge nach in die Fahrzeugquerrichtung montiert werden können.

Das Gehäuse 101 für die Batteriezelle 100 kann als ein Lastgehäuse mit einer erhöhten Wandstärke ausgeführt sein, um große Lasten abzufangen und/oder an die Fahrzeugkarosserie weiterzuleiten. Das Gehäuse 101 kann vorzugsweise mithilfe eines Tiefziehprozesses hergestellt werden und eine Zylindermantelform mit einem monolithisch verbundenen Boden aufweisen. Das Gehäuse 101 kann weiterhin einen nicht dargestellten, bspw. abschließbaren, Deckel aufweisen. Am Boden und/oder am Deckel des Gehäuses 101 können entsprechende Anschlüsse für die elektrische Verschaltung 102 und für die Kühlung 103 ausgebildet sein.

Die Figuren 3, 4 und 5 verdeutlichen, dass die mindestens zwei Elektrodenelemente 11, 12 ein Stecksystem bilden können, um eine variable Anpassung von Reichweite und Leistung der Batteriezelle 100 zu ermöglichen. Die Figuren 3 bis 5 zeigen links einen Querschnitt und rechts einen Längsschnitt durch die jeweilige Batteriezelle 100.

Die Figuren 3 bis 5 zeigen, dass die mindestens zwei Elektrodenelemente 11, 12 sowie die mindestens zwei Temperierungselemente 21, 22 zylindermantelförmig ausgebildet und/oder koaxial zueinander anordenbar sind, sodass sie vorzugsweise spielfrei aneinander anliegen können. Durch die vorzugsweise spielfreie Auflage der mindestens zwei Elektrodenelemente 11, 12 an den mindestens zwei Temperierungselementen 21, 22 erfolgt der Wärmeübergang zum Temperieren der mindestens zwei Elektrodenelemente 11, 12.

Die mindestens zwei Elektrodenelemente 11, 12 weisen unterschiedliche Durchmesser D1, D2 auf. Die mindestens zwei Temperierungselemente 21, 22 weisen ebenfalls unterschiedliche Durchmesser t1, t2 auf.

Die Figuren 4 und 5 zeigen, dass bei einer Batteriezelle 100 mindestens ein hülsenförmiger (oder hohler) oder zylinderförmiger (monolithischer) Füllkörper 30 vorgesehen sein kann, auf welchem das mindestens eine Elektrodenelement 10 angeordnet sein kann.

In der Figur 4 ist ein erster Füllkörper 31 gezeigt, der den Elektrodenkern 13 ersetzt. In der Figur 5 ist ein zweiter Füllkörper 32 gezeigt, der den Elektrodenkern 13 und das zweite Elektrodenelement 12 ersetzt.

Die mindestens zwei Füllkörper 31, 32 weisen unterschiedliche Durchmesser d1, d2 auf. Mithilfe des mindestens einen Füllkörpers 30 kann ein anpassungsfähiges Stecksystem bereitgestellt werden.

Die voranstehende Beschreibung der Figuren beschreibt die vorliegende Erfindung ausschließlich im Rahmen von Beispielen.

### Bezugszeichenliste

- 10: Elektrodenelement
- 11: Elektrodenelement, erstes Elektrodenelement
- 12: Elektrodenelement, zweites Elektrodenelement
- 13: Elektrodenelement, Elektrodenkern

- 20: Temperierungselement
- 21: Temperierungselement, erstes Temperierungselement
- 22: Temperierungselement, zweites Temperierungselement
- 23: Temperierungselement, drittes Temperierungselement

- 30: Füllkörper
- 31: Füllkörper, erster Füllkörper
- 32: Füllkörper, zweiter Füllkörper

- 100: Batteriezelle
- 101: Gehäuse
- 102: elektrische Verschaltung
- 103: Kühlung

- A: Außenseite
- I: Innenseite

- D1: Durchmesser
- D2: Durchmesser

- d1: Durchmesser
- d2: Durchmesser

- t1: Durchmesser
- t2: Durchmesser

## Patentansprüche

1. Batteriezelle (100) in Form einer Rundzelle, aufweisend:
mindestens ein Elektrodenelement (10) mit einer Innenseite (I) und einer Außenseite (A)
und mindestens ein Temperierungselement (20),
wobei die Innenseite (I) des mindestens einen Elektrodenelementes (10) zumindest abschnittweise mithilfe des Temperierungselementes (20) von der Außenseite (A) des mindestens einen Elektrodenelementes (10) beabstandet ist,
wobei mindestens ein hülsenförmiger oder zylinderförmiger Füllkörper (30) vorgesehen ist, auf welchem das mindestens eine Elektrodenelement (10) angeordnet ist,
und wobei die Innenseite (I) des mindestens einen Elektrodenelementes (10) zumindest abschnittsweise mithilfe des mindestens einen Temperierungselementes (20) von dem mindestens einen Füllkörper (30) beabstandet ist,
**dadurch gekennzeichnet,**
**dass** das mindestens eine Elektrodenelement (10) mindestens zwei Elektrodenelemente (11, 12) umfasst,
**dass** das mindestens eine Temperierungselement (20) zwischen der Innenseite (I) eines ersten Elektrodenelementes (11) und der Außenseite (A) eines zweiten Elektrodenelementes (12) angeordnet ist,
und **dass** der mindestens eine Füllkörper (30) mindestens zwei Füllkörper (31, 32) mit unterschiedlichen Durchmessern (d1, d2) aufweist, auf welchen eine skalierbare Anzahl an den mindestens zwei Elektrodenelementen (11, 12) anordenbar ist.

2. Batteriezelle (100) nach Anspruch 1,
**dadurch gekennzeichnet,**
**dass** das mindestens eine Temperierungselement (20) in Form eines Kühlelementes und/oder eines mit einem Kühlmedium durchflossenen Kühlleiters ausgeführt ist.

3. Batteriezelle (100) nach einem der vorhergehenden Ansprüche,
**dadurch gekennzeichnet,**
**dass** ein Gehäuse (101) für die Batteriezelle (100) vorgesehen ist,
und/oder dass die Außenseite (A) des mindestens einen Elektrodenelementes (10) zumindest abschnittweise mithilfe des mindestens einen Temperierungselementes (20) vom Gehäuse (101) beabstandet ist.

4. Batteriezelle (100) nach einem der vorhergehenden Ansprüche,
**dadurch gekennzeichnet,**
**dass** die mindestens zwei Elektrodenelemente (11, 12) ein Stecksystem bilden.

5. Batteriezelle (100) nach einem der vorhergehenden Ansprüche,
**dadurch gekennzeichnet,**
**dass** die mindestens zwei Elektrodenelemente (11, 12) zylindermantelförmig ausgebildet und/oder koaxial zueinander anordenbar sind,
und/oder dass die mindestens zwei Elektrodenelemente (11, 12) unterschiedliche Durchmesser (D1, D2) aufweisen.

6. Batteriezelle (100) nach einem der vorhergehenden Ansprüche,
**dadurch gekennzeichnet,**
**dass** das mindestens eine Temperierungselement (20) mindestens zwei Temperierungselemente (21, 22) umfasst.

7. Batteriezelle (100) nach Anspruch 6,
**dadurch gekennzeichnet,**
**dass** die mindestens zwei Temperierungselemente (21, 22) zylindermantelförmig ausgebildet und/oder koaxial zueinander anordenbar sind,
und/oder dass die mindestens zwei Temperierungselemente (21, 22) unterschiedliche Durchmesser (t1, t2) aufweisen.

8. Verfahren zum Herstellen einer Batteriezelle (100) in Form einer Rundzelle nach einem der vorhergehenden Ansprüche, aufweisend mindestens einen Schritt:
- Positionieren mindestens eines Temperierungselements (20) derart an mindestens einem Elektrodenelement (10) der Batteriezelle (100), dass eine Innenseite (I) des mindestens einen Elektrodenelementes (10) zumindest abschnittweise mithilfe des Temperierungselementes (20) von einer Außenseite (A) des mindestens einen Elektrodenelementes (10) beabstandet ist,
- Bereitstellen mindestens eines hülsenförmigen oder zylinderförmigen Füllkörpers (30), auf welchem das mindestens eine Elektrodenelement (10) derart angeordnet wird, sodass die Innenseite (I) des mindestens einen Elektrodenelementes (10) zumindest abschnittweise mithilfe des mindestens einen Temperierungselementes (20) von dem mindestens einen Füllkörper (30) beabstandet ist,
- Bereitstellen von mindestens zwei Füllkörpern (31, 32) mit unterschiedlichen Durchmessern (d1, d2), und gegebenenfalls
- Einstecken von mindestens einem der zwei Füllkörper (31, 32) anstelle eines zylinderförmigen Elektrodenkerns (13) und/oder anstelle mindestens eines von den mindestens zwei Elektrodenelementen (11, 12).

9. Verfahren nach Anspruch 8,
**dadurch gekennzeichnet,**
**dass** das Verfahren mindestens einen weiteren Schritt aufweist:
- Ineinanderstecken von mindestens zwei Elektrodenelementen (11, 12), sodass das mindestens eine Temperierungselement (20) zwischen der Innenseite (I) eines ersten Elektrodenelementes (11) und der Außenseite eines zweiten Elektrodenelementes (12) angeordnet ist.

## Claims

1. Battery cell (100) in the form of a round cell, having:
at least one electrode element (10) with an inner side (I) and an outer side (A)
and at least one temperature-control element (20),
wherein the inner side (I) of the at least one electrode element (10) is spaced apart from the outer side (A) of the at least one electrode element (10) at least in sections by means of the temperature-control element (20),
wherein at least one sleeve-like or cylindrical filler body (30) is provided, on which the at least one electrode element (10) is arranged,
and wherein the inner side (I) of the at least one electrode element (10) is spaced apart from the at least one filler body (30) at least in sections by means of the at least one temperature-control element (20),
**characterized**
**in that** the at least one electrode element (10) comprises at least two electrode elements (11, 12),
**in that** the at least one temperature-control element (20) is arranged between the inner side (I) of a first electrode element (11) and the outer side (A) of a second electrode element (12),
and **in that** the at least one filler body (30) has at least two filler bodies (31, 32) with different diameters (d1, d2), on which filler bodies a scalable number of the at least two electrode elements (11, 12) can be arranged.

2. Battery cell (100) according to Claim 1,
**characterized**
**in that** the at least one temperature-control element (20) is designed in the form of a cooling element and/or a cooling conductor through which a cooling medium flows.

3. Battery cell (100) according to either of the preceding claims,
**characterized**
**in that** a housing (101) is provided for the battery cell (100),
and/or in that the outer side (A) of the at least one electrode element (10) is spaced apart from the housing (101) at least in sections by means of the at least one temperature-control element (20).

4. Battery cell (100) according to any of the preceding claims,
**characterized**
**in that** the at least two electrode elements (11, 12) form a plug-in system.

5. Battery cell (100) according to any of the preceding claims,
**characterized**
**in that** the at least two electrode elements (11, 12) are in the form of a cylindrical casing and/or can be arranged coaxially in relation to each other,
and/or in that the at least two electrode elements (11, 12) have different diameters (D1, D2).

6. Battery cell (100) according to any of the preceding claims,
**characterized**
**in that** the at least one temperature-control element (20) comprises at least two temperature-control elements (21, 22).

7. Battery cell (100) according to Claim 6,
**characterized**
**in that** the at least two temperature-control elements (21, 22) are in the form of a cylindrical casing and/or can be arranged coaxially in relation to each other, and/or in that the at least two temperature-control elements (21, 22) have different diameters (t1, t2).

8. Method for producing a battery cell (100) in the form of a round cell according to any of the preceding claims, comprising at least one step:
- positioning at least one temperature-control element (20) on at least one electrode element (10) of the battery cell (100) in such a way that an inner side (I) of the at least one electrode element (10) is spaced apart from an outer side (A) of the at least one electrode element (10) at least in sections by means of the temperature-control element (20),
- providing at least one sleeve-like or cylindrical filler body (30), on which the at least one electrode element (10) is arranged in such a way that the inner side (I) of the at least one electrode element (10) is spaced apart from the at least one filler body (30) at least in sections by means of the at least one temperature-control element (20),
- providing at least two filler bodies (31, 32) with different diameters (d1, d2), and, if necessary,
- inserting at least one of the two filler bodies (31, 32) instead of a cylindrical electrode core (13) and/or instead of at least one of the at least two electrode elements (11, 12).

9. Method according to Claim 8,
**characterized**
**in that** the method comprises at least one further step:
- inserting at least two electrode elements (11, 12) one into the other, so that the at least one temperature-control element (20) is arranged between the inner side (I) of a first electrode element (11) and the outer side of a second electrode element (12).

## Revendications

1. Élément de batterie (100) sous la forme d'un élément cylindrique, comportant :
au moins un élément d'électrode (10) présentant une face intérieure (I) et une face extérieure (A)
et au moins un élément de régulation de température (20), la face intérieure (I) de l'au moins un élément d'électrode (10) étant espacée, au moins par endroits, de la face extérieure (A) de l'au moins un élément d'électrode (10) à l'aide de l'élément régulateur de température (20),
au moins un corps de remplissage (30) en forme de douille ou en forme de cylindre étant prévu, sur lequel est disposé l'au moins un élément d'électrode (10),
la face intérieure (I) de l'au moins un élément d'électrode (10) étant espacée, au moins par endroits, de l'au moins un corps de remplissage (30) au moyen de l'au moins un élément de régulation de température (20), **caractérisé**
**en ce que** l'au moins un élément d'électrode (10) comprend au moins deux éléments d'électrode (11, 12),
**en ce que** l'au moins un élément de régulation de température (20) est disposé entre la face intérieure (I) d'un premier élément d'électrode (11) et la face extérieure (A) d'un deuxième élément d'électrode (12),
et **en ce que** l'au moins un corps de remplissage (30) présente au moins deux corps de remplissage (31, 32) ayant des diamètres différents (d1, d2), sur lesquels un nombre adaptable des au moins deux éléments d'électrode (11, 12) peut être disposé.

2. Élément de batterie (100) selon la revendication 1, **caractérisé**
**en ce que** l'au moins un élément de régulation de température (20) est réalisé sous la forme d'un élément de refroidissement et/ou d'un conducteur de refroidissement parcouru par un fluide de refroidissement.

3. Élément de batterie (100) selon l'une des revendications précédentes,
**caractérisé**
**en ce qu'**il est prévu un boîtier (101) pour l'élément de batterie (100),
et/ou en ce que la face extérieure (A) de l'au moins un élément d'électrode (10) est espacée, au moins par endroits, du boîtier (101) à l'aide de l'au moins un élément de régulation de température (20).

4. Élément de batterie (100) selon l'une des revendications précédentes,
**caractérisé**
**en ce que** les au moins deux éléments d'électrode (11, 12) forment un système enfichable.

5. Élément de batterie (100) selon l'une des revendications précédentes,
**caractérisé**
**en ce que** les au moins deux éléments d'électrode (11, 12) sont réalisés en forme d'enveloppe cylindrique et/ou peuvent être disposés coaxialement l'un par rapport à l'autre,
et/ou en ce que les au moins deux éléments d'électrode (11, 12) présentent des diamètres différents (D1, D2).

6. Élément de batterie (100) selon l'une des revendications précédentes,
**caractérisé**
**en ce que** l'au moins un élément de régulation de température (20) comprend au moins deux éléments de régulation de température (21, 22).

7. Élément de batterie (100) selon la revendication 6, **caractérisé**
**en ce que** les au moins deux éléments de régulation de température (21, 22) sont réalisés en forme d'enveloppe cylindrique et/ou peuvent être disposés coaxialement l'un par rapport à l'autre,
et/ou en ce que les au moins deux éléments de régulation de température (21, 22) présentent des diamètres différents (t1, t2).

8. Procédé de fabrication d'un élément de batterie (100) sous la forme d'une cellule cylindrique selon l'une des revendications précédentes, comprenant au moins une étape consistant à :
- positionner au moins un élément de régulation de température (20) sur au moins un élément d'électrode (10) de l'élément de batterie (100) de telle sorte qu'une face intérieure (I) de l'élément d'électrode (10) soit espacée, au moins par endroits, d'une face extérieure (A) de l'au moins un élément d'électrode (10) à l'aide de l'élément de régulation de température (20),
- prévoir au moins un corps de remplissage (30) en forme de douille ou en forme de cylindre, sur lequel l'au moins un élément d'électrode (10) est disposé de telle sorte que la face intérieure (I) de l'élément d'électrode (10) soit espacée, au moins par endroits, de l'élément de remplissage (30) à l'aide de l'élément régulateur de température (20),
- prévoir au moins deux corps de remplissage (31, 32) ayant des diamètres différents (d1, d2), et le cas échéant
- enficher au moins l'un des corps de remplissage (31, 32) à la place d'un noyau d'électrode cylindrique (13) et/ou à la place d'au moins un des au moins deux éléments d'électrode (11, 12).

9. Procédé selon la revendication 8,
**caractérisé**
**en ce que** le procédé comprend au moins une étape supplémentaire consistant à :
- enficher au moins deux éléments d'électrode (11, 12) l'un dans l'autre, de telle sorte que l'au moins un élément de régulation de température (20) soit disposé entre la face intérieure (I) d'un premier élément d'électrode (11) et la face extérieure (A) d'un deuxième élément d'électrode (12).
